# EUROPÄISCHE PATENTANMELDUNG

(11) **EP 0 802 660 A2**
(43) Veröffentlichungstag der Anmeldung: **22.10.1997**
(21) Anmeldenummer: 97102075.5
(22) Anmeldetag: 10.02.1997
(51) Int. Cl.: H04M 1/72, H01M 2/10

(54) **Batteriegehäuse für tragbare Telefone**

(30) Priorität: 18.04.1996 DE 29607055 U
(71) Anmelder: VARTA Batterie Aktiengesellschaft, 30419 Hannover (DE)
(72) Erfinder: Krause, Manfred, 58339 Breckerfeld (DE)
(74) Vertreter: Kaiser, Dieter Ralf, Dipl.-Ing.

(57) **Zusammenfassung**

Bei einem Batteriegehäuse, welches auf ein tragbares Telefon aufsetzbar ist, ist zur Befestigung ein Verriegelungsmechanismus in Form einer in eine Öffnung (5) am Telefongehäuse (6) eintauchenden Verriegelungsnase (4) vorgesehen. Diese Verriegelungsnase (4) ist federnd am Gehäuseunterteil des Batteriegehäuses befestigt und wirkt mit mindestens einer Gleitfläche (8) zusammen, die insbesondere die Form einer schiefen Ebene besitzt, über welche sie mittels einer verschiebbaren Taste (9) aus der verriegelten Stellung herausdrückbar ist.

## Beschreibung

Gegenstand der Erfindung ist ein auf ein tragbares Telefon aufsetzbares Batteriegehäuse, welches zur Befestigung am Batteriegehäuse einen Verriegelungsmechanismus in Form einer in eine Öffnung am Telefongehäuse eintauchenden Nase besitzt.

Tragbare Telefone sind im allgemeinen mit Stromquellen in Form von Akkumulatoren versehen. Die Akkumulatoren werden in Batteriegehäusen angeordnet, die vom Gerät trennbar sind und getrennt aufgeladen werden können. Derartige Batteriegehäuse werden auf der Rückseite des Telefons in Führungsschienen eingeschoben, dabei wird gleichzeitig der elektrische Kontakt hergestellt, und es erfolgt eine Verriegelung, um unbeabsichtigtes Lösen des Batteriepacks vom Telefon zu vermeiden.

Eine Ausführungsform eines solchen Batteriepacks ist dem europäischen Patent 367 608 zu entnehmen. Dabei ist das Batteriegehäuse mit Führungsschienen versehen, in die entsprechende Führungen am Telefon einführbar sind, so daß das Batteriegehäuse auf das Telefongehäuse aufschiebbar ist. Zur Verriegelung ist am Batteriegehäuse ein Rastklinkenmechanismus vorgesehen, der eine an einem Torsionsstab befestigte Sprerrklinke enthält, die mit einer Nase in eine Öffnung des Telefongehäuses eintaucht.

Aufgabe der Erfindung ist es, einen Verriegelungsmechanismus anzugeben, der einfach aufgebaut und einfach herstellbar ist und der eine zuverlässige Ver- und Entriegelung des Batteriegehäuses am tragbaren Telefon gewährleistet.

Diese Aufgabe wird erfindungsgemäß mit einem Batteriegehäuse gelöst, welches im Patentanspruch 1 definiert ist.

Die Unteransprüche enthalten weitere vorteilhafte Ausührungsformen eines erfindungsgemäßen Batteriegehäuses.

Die zur Verriegelung des Batteriegehäuses mit dem tragbaren Telefon dienende Verriegelungsnase ist federnd am Batteriegehäuse befestigt, und sie wirkt mit mindestens einer Gleitfläche zusammen, über weiche sie mittels einer verschiebbaren Taste aus der verriegelten Stellung herausdrückbar ist. Diese Gleitfläche ist vorzugsweise als Schiefe Ebene ausgebildet. Vorteilhaft ist es, die Verriegelungsnase etwa in der Mitte eines federnden Tragebalkens anzuordnen und beidseitig oberhalb der Verriegelungsnase Gleitflächen in Form von schiefen Ebenen anzuordnen, die mit jeweils einer Zunge, die an der verschiebbaren Taste angeordnet ist, zusammenwirken.

Im folgenden ist der Gegenstand der Erfindung anhand der Figuren näher erläutert:
Figur 1 zeigt das Batteriegehäuse im Querschnitt (ohne verschiebbare Taste).
Figur 2 zeigt vergrößert einen Teil des Batteriegehäuses, welcher den Verriegelungsmechanismus enthält, im entriegelten Zustand.
Figur 3 zeigt den gleichen Teil des Batteriegehäuses im verriegelten Zustand.
Figur 4 zeigt einen Teil des Unterteils des Batteriegehäuses in Draufsicht.
Figur 5 zeigt eine Taste (9) im Querschnitt und
Figur 6 die gleiche Taste in einer Draufsicht.

Das Batteriegehäuse 1 besteht aus einem Gehäuseoberteil 2 und einem Gehäuseunterteil 3, die nach Einbau der Akkumulatoren 20, der nicht näher bezeichneten elektrischen Verbindungen und des erfindungsgemäßen Verriegelungsmechanismus miteinander verklebt oder verschweißt werden. Anstelle von Rundzellen können auch prismatische Flachzellen verwendet werden. Damit ergibt sich insgesamt eine flachere Bauweise des Batteriegehäuses.

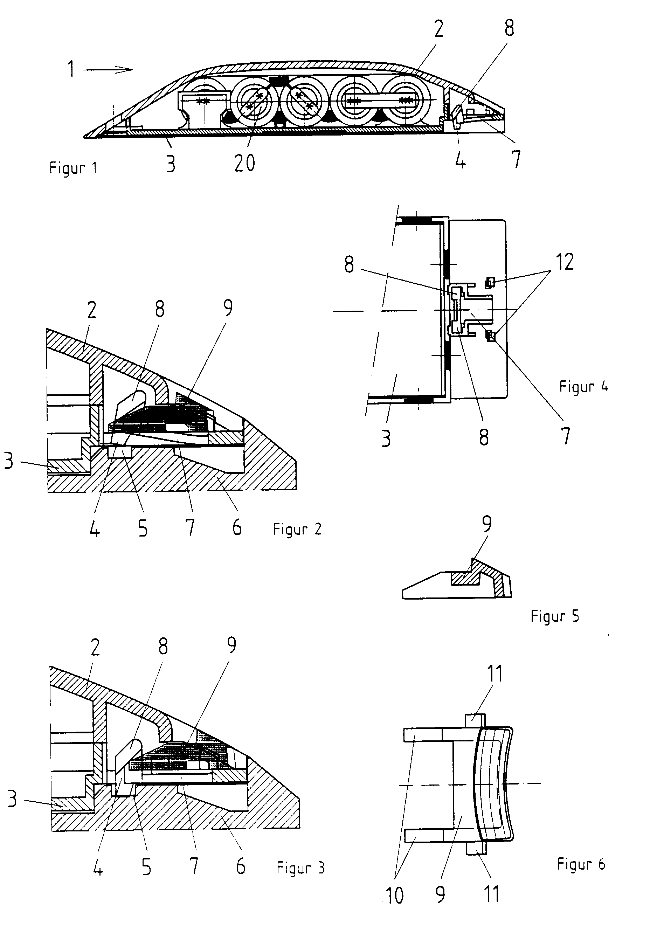

Der erfindungsgemäße Verriegelungsmechanismus besteht aus einer federnd im Batteriegehäuseunterteil 3 angebrachten Verriegelungsnase 4, die in eine Öffnung 5 am schematisch dargestellten Gehäuse 6 des tragbaren Telefons eintaucht (Figur 2 und Figur 3). Diese Verriegelungsnase ist an einem unter Vorspannung stehenden federnden Tragbalken 7 angeordnet (Figur 4). Am Tragbalken 7 ist eine Gleitfläche 8 vorgesehen, die mit einer verschiebbaren Taste 9 zusammenarbeitet. Diese verschiebbare Taste 9 wird vor dem Zusammenfügen von Gehäuseoberteil und Gehäuseunterteil eingebracht. Sie befindet sich in Figur 2 in der entriegelten Stellung, in der das Batteriegehäuse vom Telefongehäuse abgenommen werden kann.

Durch Bewegen dieser Taste 9 entlang der Gleitfläche 8 am Tragbalken 7 wird die Verriegelungsnase 4 aus ihrer entriegelten Stellung in die in Figur 3 dargestellte verriegelte Stellung gebracht, durch die das Batteriegehäuse am Telefongehäuse verriegelt wird. Da der Tragbalken 7 unter Vorspannung in das Gehäuseunterteil 3 eingespritzt ist, bleibt die Verriegelungsnase 4 in der verriegelten Stellung.

Die Gleitfläche 8, an der die Taste 9 entlanggeschoben wird, ist vorzugsweise als schiefe Ebene ausgebildet.

Vorteilhaft ist es, die Verriegelungsnase etwa in der Mitte am Ende des federnden Tragbalkens 7 anzuordnen und beidseitig oberhalb der Verriegelungsnase 4 Gleitflächen 8 in Form von schiefen Ebenen anzuordnen. Dies Gleitflächen arbeiten mit jeweils einer Zunge 10, die an der verschiebbaren Taste 9 angeordnet sind, zusammen. Als Haltetung und Endanschlag für die verschiebbare Taste 9 sind an der Taste Vorsprünge 11 vorgesehen, welche in entsprechende Haltenocken 12 am Unterteil des Batteriegehäuses 3 zusammenarbeiten.

Der erfindungsgemäße Verriegelungsmechanismus ist sehr einfach herstellbar und arbeitet äußerst zuverlässig, so daß insbesondere jegliches unbeabsichtigte Lösen des Batteriegehäuses vom tragbaren Telefon sicher vermieden wird.

## Patentansprüche

1. Auf ein tragbares Telefon aufsetzbares Batteriegehäuse, welches zur Befestigung einen Verriegelungsmechanismus in Form einer in eine Öffnung am Telefongehäuse eintauchenden Nase besitzt, dadurch gekennzeichnet, daß die Verriegelungsnase (4) federnd am Batteriegehäuse (2,3) befestigt ist und ihr mindestens eine Gleitfläche (8) zugeordnet ist, über welche sie mittels einer verschiebbaren Taste (9) aus der verriegelten Stellung herausdrückbar ist.

2. Batteriegehäuse nach Anspruch 1, dadurch gekennzeichnet, daß die Gleitfläche (8) als schiefe Ebene ausgebildet ist.

3. Batteriegehäuse nach den Ansprüchen 1 und 2, dadurch gekennzeichnet, daß die Verriegelungsnase (4) etwa in der Mitte eines federnden Tragebalkens (7) angeordnet ist und sich beidseitig oberhalb der Verriegelungsnase (4) Gleitflächen (8) in Form von schiefen Ebenen erstrecken, die mit jeweils einer Zunge (10), die an der verschiebbaren Taste (9) angeordnet sind, zusammenwirken.
